# EUROPEAN PATENT SPECIFICATION

(11) **EP 3 581 774 B1**
(45) Date of publication and mention of the grant of the patent: **17.02.2021**
(21) Application number: 19175556.0
(22) Date of filing: 21.05.2019
(51) Int. Cl.: F01N 3/20, F01N 11/00

(54) **FIRST FILL FUNCTION TRIGGERING CONTROL MODULE AND METHOD FOR VEHICLE SCR SYSTEM**
MODUL ZUM AUSLÖSEN DER ERSTFÜLLUNGS-FUNKTION UND VERFAHREN FÜR EIN SCR-SYSTEM EINES VEHIKELS
MODULE DE COMMANDE DE DÉCLENCHEMENT DE PREMIÈRE FONCTION DE REMPLISSAGE ET PROCÉDÉ POUR SYSTÈME SCR DE VÉHICULE

(30) Priority: 11.06.2018 CN 201810595192
(43) Date of publication of application: 18.12.2019
(73) Proprietor: Robert Bosch GmbH, 70442 Stuttgart (DE)
(72) Inventor: Joshi, Rohit, 70469 Stuttgart (DE); Liu, Yi, Wuxi, Jiangsu 214028, (CN)

(56) References cited:
- EP-A1- 2 905 441
- WO-A1-2012/134516
- DE-A1-102014 226 503
- DE-U1-202009 008 381
- GB-A- 2 555 466

## Description

The present invention relates to a control module and a control method for use in a vehicle SCR system.

DE 20 2009 008 381 U1 includes a tank system including a tank docking unit, wherein a control module recognizes an ID of the tank before starting the normal operation.

### Background art

In order to reduce the NOx content of vehicle engine exhaust gas, SCR systems have been developed, and are used to inject exhaust gas treatment liquid into the exhaust gas, so as to reduce the NOx in the exhaust gas using the method of selective catalytic reduction to form harmless constituents such as nitrogen, water and carbon dioxide. An SCR system comprises a liquid tank holding exhaust gas treatment liquid, a metering injection unit for injecting exhaust gas treatment liquid into an exhaust pipe, and a supply unit for drawing exhaust gas treatment liquid from the liquid tank and supplying it under pressure to the metering injection unit. The supply unit includes a main pump, for drawing the exhaust gas treatment liquid and supplying it under pressure. Since the main pump has stringent requirements regarding cleanliness, a filter is provided in the liquid tank, so that only clean exhaust gas treatment liquid can reach the supply unit. Furthermore, the SCR system requires the use of standard exhaust gas treatment liquid of a specific concentration, hence, an exhaust gas treatment liquid concentration sensor is provided in the liquid tank, in order to detect the concentration of the exhaust gas treatment liquid.

After the liquid tank is filled with exhaust gas treatment liquid for the first time, air which is initially present in the filter etc. will enter the main pump in the form of bubbles. In addition, when the main pump is used for the first time, residual air is also present in the main pump. Since the main pump is specially provided for the purpose of pumping liquid, if air is entrained in exhaust gas treatment liquid in the main pump, there is a possibility that this will affect the operation of the main pump, e.g. blocking the main pump such that the operating efficiency of the SCR system is reduced, generating a high level of vibration and noise, etc. For this reason, a first fill function is provided in the SCR system, for discharging air from the main pump side back to the liquid tank, in order to clear air in the main pump.

When a new liquid tank or a new main pump is used for the first time, the first fill function must be executed. However, at present, the first fill function is always triggered on the basis of an external instruction. If the liquid tank or the main pump is replaced outside of a standard vehicle inspection, an operator might forget to execute the first fill function, or be unable to find a specialist to correctly execute the first fill function; this might create problems for the subsequent operation of the SCR system.

### Content of the invention

For the reasons described above, an object of the present application is to provide a control technology capable of automatically triggering a first fill function when a new device causing air to enter a main pump in the SCR system, such as a liquid tank or the main pump, initially enters use.

According to one aspect of the present application, a control module for use in an SCR system of a vehicle (in particular a diesel engine vehicle), is provided, as defined in independent claim 1.

According to another aspect of the present application, a control method for use in an SCR system of a vehicle (in particular a diesel engine vehicle) is provided, as defined in independent claim 9.

According to another aspect of the present application, a machine- or computer-readable medium is provided, storing software which, when executed, can realize the first fill function triggering control method for use in a vehicle SCR system as described above, as defined in independent claim 10.

According to the present application, when a new device causing air to enter a main pump in the SCR system, such as a liquid tank or the main pump, initially enters use, the first fill function can be triggered automatically, such that bubbles entering the supply unit from the new device are forced to return to the liquid tank, thereby avoiding problems caused by bubbles, such as a reduction in SCR system operating efficiency, a high level of vibration and noise.

### Description of the accompanying drawings

Figs. 1 - 3 are schematic diagrams of SCR systems according to feasible embodiments of the present application, the SCR systems including a first fill function triggering control module for intelligent triggering of a first fill function according to the present application.
Fig. 4 is a schematic operation diagram explaining the first fill function triggering control module for intelligent triggering of a first fill function according to the present application.

### Particular embodiments

Preferred embodiments of the present application are described below with reference to the accompanying drawings.

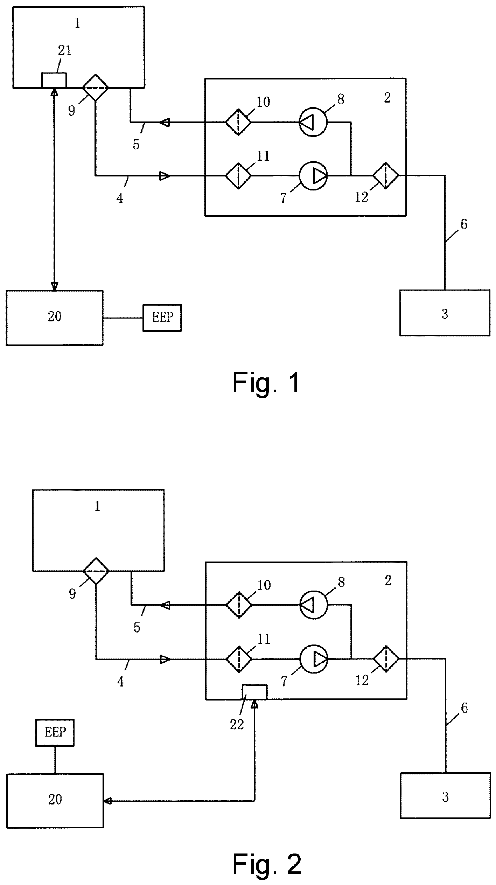

Fig. 1 shows an exhaust gas SCR system for use in a vehicle, in particular a diesel engine vehicle, according to an embodiment of the present application; the exhaust gas SCR system is associated with an exhaust pipe (not shown) of a vehicle engine, and is used for injecting exhaust gas treatment liquid (generally an aqueous urea solution) into the exhaust pipe in order to lower the NOx content of exhaust gas. The SCR system mainly comprises a liquid tank 1, a supply unit 2 and a metering injection unit 3. The tank 1 is used for holding exhaust gas treatment liquid. The supply unit 2 is used for drawing exhaust gas treatment liquid from the liquid tank 1 and supplying it under pressure to the metering injection unit 3. The metering injection unit 3 is used for injecting exhaust gas treatment liquid into the exhaust pipe in a metered fashion.

A suction pipeline 4 and a backflow pipeline 5 are connected between the supply unit 2 and the liquid tank 1; a pressure pipeline 6 is connected between the supply unit 2 and the metering injection unit 3. The supply unit 2 includes a main pump 7; the main pump 7 operates after the engine has started, and is used for drawing exhaust gas treatment liquid from the liquid tank 1 via the suction pipeline 4, and supplying exhaust gas treatment liquid to the metering injection unit 3 via the pressure pipeline 6; at the same time, a portion of exhaust gas treatment liquid can return to the liquid tank 1 from the supply unit 2 via the backflow pipeline 5.

The supply unit 2 includes a withdrawal pump 8, for performing an exhaust gas treatment liquid purging operation after the engine has stopped running. Specifically, when the engine has stopped running and the main pump 7 has stopped operating, the withdrawal pump 8 is activated, to force exhaust gas treatment liquid in the supply unit 2 to flow back to the liquid tank 1 via the backflow pipeline 5; at the same time, exhaust gas treatment liquid in the pressure pipeline 6 and the metering injection unit 3 flows back to the supply unit 2. Through the purging operation of the withdrawal pump 8, it is possible to prevent exhaust gas treatment liquid from freezing in the supply unit 2 and crystallizing in the metering injection unit 3 etc. after the engine has stopped running.

A filter 9 is provided in the liquid tank 1, and is connected to an upstream end of the suction pipeline 4. In addition, in the supply unit 2, a filter 10 is arranged downstream of the withdrawal pump 8, and filters 11 and 12 are arranged upstream and downstream of the main pump 7 respectively.

The SCR system is also provided with an SCR system controller, for controlling the operation of the SCR system. The SCR system controller may be integrated in a vehicle controller (ECU) or an engine system controller.

The SCR system of the present application has a first fill function. Specifically, when a new liquid tank 1 is used for the first time, or the liquid tank 1 is replaced, air will be present in the filter 9 when the liquid tank 1 has been filled with exhaust gas treatment liquid. Of course, air might also be present in the suction pipeline 4. Once the main pump 7 has been activated, the abovementioned air will be drawn into the main pump 7. At this time, the withdrawal pump 8 is activated, and discharges the abovementioned air into the liquid tank 1 via the backflow pipeline 5, thereby purging the abovementioned air. Next, the main pump 7 is activated, and once normal operating pressure has been established in the main pump 7, the metering injection unit 3 can activate an injection operation. In this way, it is possible to avoid a situation where air entering the main pump 7 affects the performance of the main pump 7 and even the entire SCR system.

The SCR system of the present application is configured to be able to automatically execute the first fill function when a new liquid tank 1 is used for the first time. To this end, a first fill function triggering control module 20 is disposed in the SCR system of the present application, and can be integrated in the vehicle controller, or the SCR system controller, or the engine system controller, as a part of the controller; alternatively, the first fill function triggering control module may be formed separately, and connected to the vehicle controller, or the SCR system controller, or the engine system controller.

The first fill function triggering control module 20 is connected to the liquid tank 1, e.g. connected to a data exchange interface on the liquid tank 1, and is thereby able to automatically recognize a new liquid tank 1, and on this basis activate the first fill function. Specifically, the first fill function triggering control module 20 automatically recognizes the new liquid tank 1 on the basis of an ID of the liquid tank 1 or a component element thereof.

For example, the liquid tank 1 itself has a liquid tank ID; each time the engine is started, the first fill function triggering control module 20 determines whether the liquid tank 1 is newly installed by reading the liquid tank ID and comparing it with a previously stored liquid tank ID.

Alternatively, an intrinsic component element of the liquid tank 1 has its own component element ID; each time the engine is started, the first fill function triggering control module 20 reads the component element ID via the data exchange interface on the liquid tank 1, and compares it with a previously stored component element ID; if the comparison result indicates a difference, the first fill function triggering control module 20 determines that the liquid tank 1 is newly installed.

An example of such a component element is an intrinsic sensor or sensors 21 in the liquid tank 1, e.g. an exhaust gas treatment liquid temperature sensor, a pressure sensor, a liquid level sensor, a concentration sensor, a quality (degree of cleanliness) sensor, a sensor combining multiple detection functions, etc. According to one feasible embodiment, the liquid tank sensor 21 is an integrated exhaust gas treatment liquid level, temperature and concentration sensor.

The liquid tank sensor 21 has a liquid tank sensor ID; each time the engine is started, the first fill function triggering control module 20 reads the liquid tank sensor ID of the liquid tank sensor 21 via the data exchange interface on the liquid tank 1, and compares it with a previously stored liquid tank sensor ID; if the comparison result indicates a difference, the first fill function triggering control module 20 determines that the liquid tank 1 is newly installed.

It must be pointed out here that the liquid tank ID or liquid tank sensor ID may be stored in an erasable memory EEP. The memory EEP may be disposed in the vehicle controller, or the SCR system controller, or the engine system controller. The first fill function triggering control module 20 compares the liquid tank ID or liquid tank sensor ID which is read with a liquid tank ID or liquid tank sensor ID stored in the memory EEP, and when the comparison result indicates a difference, determines that the liquid tank 1 is a newly installed liquid tank, and writes (updates) into the memory EEP the liquid tank ID or liquid tank sensor ID of the liquid tank sensor 21 of the newly installed liquid tank 1.

Once the engine has started, if the first fill function triggering control module 20 determines that the liquid tank 1 is newly installed by recognizing the liquid tank ID or the liquid tank sensor ID of the intrinsic sensor in the liquid tank 1, the first fill function triggering control module 20 automatically triggers the first fill function, in order to use the withdrawal pump 8 to purge the air entering the supply unit 2 from the liquid tank 1 side. The SCR system then enters normal operation.

It must be pointed out that the first fill function triggering control module 20 is connected to the liquid tank 1 in a manner allowing the acquisition of an ID signal; the connection may be direct, or indirect via the SCR system controller or another element, as long as the first fill function triggering control module 20 is able to read the liquid tank ID or the ID of the intrinsic component element (e.g. liquid tank sensor).

Fig. 2 shows an exhaust gas SCR system according to another embodiment of the present application, capable of automatically recognizing a newly installed supply unit 2 once the engine has started, and on this basis activating the first fill function.

Specifically, in the SCR system shown in fig. 2, the first fill function triggering control module 20 is connected to a data exchange interface of the supply unit 2 (directly or indirectly), and is thereby able to read a supply unit ID of the supply unit 2. Each time the engine is started, the first fill function triggering control module 20 reads the supply unit ID, compares it with a supply unit ID stored in the memory EEP, and when a comparison result indicates a difference, determines that the supply unit 2 is a newly installed supply unit, and on this basis triggers the first fill function.

Alternatively, the first fill function triggering control module 20 may be connected, via the data exchange interface of the supply unit 2, to an intrinsic component element in the supply unit 2 , e.g. the main pump 7, the withdrawal pump 8 or a supply unit sensor 22, including a pressure sensor, temperature sensor, flow sensor, etc. Each time the engine is started, the first fill function triggering control module 20 reads an ID of the intrinsic component element, compares it with an intrinsic component element ID stored in the memory EEP, and when a comparison result indicates a difference, determines that the supply unit 2 is a newly installed supply unit, and on this basis triggers the first fill function.

When it is determined that the supply unit 2 is newly installed, the first fill function is triggered, and at the same time, the supply unit ID or intrinsic component element ID of the newly installed supply unit 2 is written into the memory EEP.

Other aspects of the embodiment shown in fig. 2 are similar to those in fig. 1, so no further detailed description is given here.

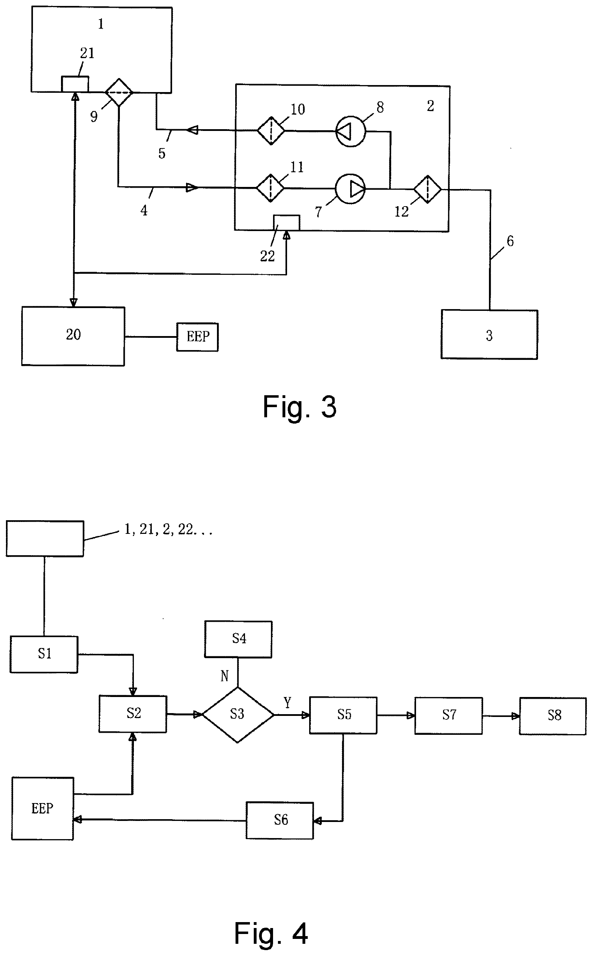

Fig. 3 shows an exhaust gas SCR system according to another embodiment of the present application, capable of automatically recognizing, when the engine starts, that either one or both of the liquid tank sensor 21 and the supply unit 2 is/are newly installed, and on this basis activating the first fill function.

Specifically, in the SCR system shown in fig. 3, the first fill function triggering control module 20 is connected to the liquid tank 1 (or an intrinsic component element thereof) and the supply unit 2 (or an intrinsic component element thereof) via corresponding data exchange interfaces, and is thereby able to read an ID of the liquid tank 1 (or the intrinsic component element thereof) and an ID of the supply unit 2 (or the intrinsic component element thereof). Each time the engine is started, the first fill function triggering control module 20 reads the liquid tank ID (or the the ID of the intrinsic component element thereof) and the supply unit ID (or the ID of the intrinsic component element thereof) via the corresponding data exchange interfaces, compares the IDs which are read with IDs stored in the memory EEP, and when at least one of the comparison results indicates a difference, determines that the liquid tank sensor 21 and/or the supply unit 2 is/are newly installed. When it is determined that one or both of the liquid tank 1 and the supply unit 2 is/are newly installed, the first fill function is triggered, and at the same time, the ID of the newly installed liquid tank 1 (or the intrinsic component element thereof) and/or the ID of the supply unit 2 (or the intrinsic component element thereof) is updated into the memory EEP.

Other aspects of the embodiment shown in fig. 3 are similar to those in figs. 1 and 2, so no further detailed description is given here.

It will be understood that according to the principles of the present application, the first fill function triggering control module 20 may be configured to be connected, via a corresponding data exchange interface, to any device in the SCR system which might cause air to enter the main pump when used for the first time, and can automatically read an ID of the device or an intrinsic component element thereof each time the engine is started, recognize a newly installed device on the basis of a comparison of the ID of the device or the intrinsic component element thereof with a corresponding stored ID, and hence automatically activate the first fill function. The quantity of the recognizable device may be one or more. In the case where there are multiple recognizable devices, each time the engine is started, the IDs of all of the recognizable devices are detected at the same time, and these IDs are compared with stored IDs; if the comparison results of one or more of the IDs indicates a difference, the first fill function is triggered.

It must be pointed out here that the meaning of "intrinsic component element" (e.g. sensor) in the recognized device is that the component element is removed/fitted in the SCR system together with the recognized device, as a part of the recognized device, and not removed/fitted in the form of an additional fitting relative to the recognized device already installed in the SCR system.

The present application also relates to a first fill function triggering control method for an SCR system; one feasible embodiment thereof is shown schematically in fig. 4. The first fill function triggering control method comprises the steps described below.

First of all, in step S1, when the engine has started and the SCR system has started together with the engine, an ID of a device or a component element thereof in the SCR system which might cause air to enter the main pump is read automatically, e.g. an ID of the liquid tank 1 described above (or an intrinsic component element thereof, such as the liquid tank sensor 21) and/or the supply unit 2 (or an intrinsic component element thereof, such as the supply unit sensor 22, the main pump 7 or the withdrawal pump 8) is detected.

Next, in step S2, the read ID of the device or component element thereof is compared with a previously stored ID of the device or component element thereof (e.g. stored in the memory EEP).

Next, in step S3, a determination is made as to whether the read ID of the device or component element thereof is the same as the stored ID of the device or component element thereof. If the result is negative, step S4 is performed; if the result is positive, step S5 is performed.

In step S4, it is determined that the device has not been installed or replaced.

In step S5, it is determined that the device is installed or replaced. After step S5, step S6 and step S7 are performed.

In step S6, the read ID of the device or component element thereof is stored.

In step S7, an instruction to trigger the first fill function is issued.

Next, in step S8, the first fill function is executed.

It can be understood that any feasible amendment may be made to the abovementioned steps of the first fill function triggering control method according to specific circumstances.

The first fill function triggering control method may be performed in the first fill function triggering control module 20 described above.

It must be pointed out that the various features described above in relation to the first fill function triggering control module 20 are likewise applicable to the first fill function triggering control method. Moreover, the various features described above in relation to the first fill function triggering control method are likewise applicable to the first fill function triggering control module 20.

In another aspect, the present application also provides software for executing first fill function triggering control in a vehicle SCR system, and any suitable form of machine- or computer-readable medium storing the software. When executed, the software can implement the method described above. The software may be formed as a software part of the first fill function triggering control module of the present application.

According to the present application, when the vehicle SCR system starts, when a newly installed device which might cause air to enter the main pump initially enters use, the first fill function can be triggered automatically, such that bubbles entering the supply unit from the newly installed device are forced to return to the liquid tank, thereby avoiding problems caused by bubbles entering the main pump, such as a reduction in SCR system operating efficiency, a high level of vibration and noise. Since the first fill function of the SCR system is triggered automatically, a situation where the first fill function fails to be executed due to the absence of external intervention is avoided. In addition, there is no need for external intervention by a specialist, etc., so labour consumption can be reduced, including labour consumption at a production line EOL or a vehicle service station, etc. In addition, the first fill function triggering control scheme of the present application does not require the addition of any hardware.

In addition, since the various sensors in the SCR system must inevitably be detected each time the engine and the SCR system start, in an embodiment in which the first fill function is triggered by reading an ID of an intrinsic sensor in a newly installed device, there is no need to add too many operations in a control program, so normal functions of the SCR system will not be affected.

Although the present application has been described here with reference to particular embodiments, the scope of the present application is not limited to the details shown. Various amendments may be made to these details without departing from the basic principles of the present application.

## Claims

1. Control module (20) for use in a vehicle SCR system, configured to:
be connected to at least one device (1; 2) in the SCR system, the device (1; 2) causing air to enter a main pump (7) of a supply module (2) of the SCR system when used for the first time;
recognize an ID of the device (1; 2) or an intrinsic component element thereof via a data exchange interface;
to be connected to a memory (EEP) storing a previously stored ID of the device (1;2) or the intrinsic component element thereof;
automatically recognize the ID of the device (1; 2) or the intrinsic component element thereof once a vehicle engine has started, and compare the recognized ID with the ID of the device (1; 2) or the intrinsic component element thereof previously stored in the memory (EEP), in order to determine whether the device is newly installed;
instruct the SCR system to begin operating, if it is determined by the comparison that the device (1; 2) is not newly installed;
trigger a first fill function of the SCR system, if it is determined by the comparison that the device (1; 2) is newly installed, and instruct the SCR system to begin operating when the first fill function has been completed;
wherein the first fill function is for discharging air from the main pump (7) to a liquid tank (1) by activating the main pump (7) and a withdrawal pump (8) to discharge the air into the liquid tank (1) via a backflow pipeline (5).

2. Control module (20) according to Claim 1, wherein the device (1; 2) is the liquid tank (1) for exhaust gas treatment liquid and/or the supply module (2).

3. Control module (20) according to Claim 2, configured to determine whether the liquid tank (1) is newly installed by recognizing an ID of an intrinsic sensor (21) in the liquid tank (1), the intrinsic sensor (21) in the liquid tank (1) comprising at least one of the following: a temperature sensor, a pressure sensor, a liquid level sensor, a concentration sensor, a quality sensor and an integrated multifunctional sensor, particularly an integrated exhaust gas treatment liquid level, temperature and concentration sensor.

4. Control module (20) according to Claim 2 or 3, configured to determine whether the supply module (2) is newly installed by recognizing an ID of the intrinsic component element in the supply module (2), wherein the intrinsic component element in the supply module comprises at least one of the following elements: the main pump (7), the withdrawal pump (8), and a sensor (22) in the supply module (2).

5. Control module (20) according to any one of Claims 1 to 4, wherein the control module (20) is integrated in a vehicle controller, an SCR system controller or an engine system controller, or wherein control module (20) is formed separately and connected to the vehicle controller, the SCR system controller or the engine system controller.

6. Control module (20) according to any one of Claims 1 to 5, wherein the memory (EEP) is an erasable memory in a vehicle controller, in an SCR system controller or in an engine system controller.

7. Control module (20) according to any one of Claims 1 to 6, configured to read IDs of multiple devices (1; 2) or intrinsic component elements thereof causing air to enter the main pump (7) when used for the first time, and trigger the first fill function of the SCR system when it is determined that one or more of the devices (1; 2) is/are newly installed.

8. Control module (20) according to any one of Claims 1 to 7, configured to write the recognized ID of the newly installed device or the intrinsic component element thereof into the memory (EEP), if the control module (20) determines that the device (1; 2) is newly installed.

9. Control method for use in a vehicle SCR system, optionally performed in the control module according to any one of Claims 1 - 8, and comprising the following steps: once a vehicle engine has started, automatically recognizing an ID of at least one device (1; 2) or intrinsic component element thereof in the SCR system, and comparing the recognized ID with a previously stored ID of the device or intrinsic component element thereof, in order to determine whether the device (1; 2) is newly installed, the device causing air to enter a main pump (7) of a supply module of the SCR system when used for the first time;
instructing the SCR system to begin operating if it is determined that the device is not newly installed;
triggering a first fill function of the SCR system if it is determined that the device (1; 2) is newly installed, and instructing the SCR system to begin operating when the first fill function has been completed;
wherein the first fill function is for discharging air from the main pump (7) to a liquid tank (1) by activating the main pump (7) and a withdrawal pump (8) to discharge the air into the liquid tank (1) via a backflow pipeline (5).

10. Machine- or computer-readable medium, storing software which, when executed, can realize the control method for use in a vehicle SCR system according to Claim 9.

## Patentansprüche

1. Steuermodul (20) zur Verwendung in einem SCR-System eines Fahrzeugs, das ausgebildet ist:
mit mindestens einer Vorrichtung (1; 2) in dem SCR-System verbunden zu sein, wobei die Vorrichtung (1; 2) bei einer ersten Verwendung bewirkt, dass Luft in eine Hauptpumpe (7) eines Versorgungsmoduls (2) des SCR-Systems eintritt;
eine ID der Vorrichtung (1; 2) oder eines wesentlichen Bestandteilelements davon über eine Datenaustauschschnittstelle zu erkennen;
mit einem Speicher (EEP) verbunden zu sein, der eine zuvor gespeicherte ID der Vorrichtung (1; 2) oder des wesentlichen Bestandteilelements davon speichert;
die ID der Vorrichtung (1; 2) oder des wesentlichen Bestandteilelements davon automatisch zu erkennen, sobald ein Fahrzeugmotor gestartet wurde, und die erkannte ID mit der ID der Vorrichtung (1; 2) oder des wesentlichen Bestandteilelements davon, die zuvor in dem Speicher (EEP) gespeichert wurde, zu vergleichen, um zu bestimmen, ob die Vorrichtung neu installiert ist;
das SCR-System anzuweisen, mit einem Betrieb zu beginnen, wenn durch den Vergleich bestimmt wird, dass die Vorrichtung (1; 2) nicht neu installiert ist;
eine Erstbefüllungsfunktion des SCR-Systems auszulösen, wenn durch den Vergleich bestimmt wird, dass die Vorrichtung (1; 2) neu installiert ist, und das SCR-System anzuweisen, mit einem Betrieb zu beginnen, wenn die Erstbefüllungsfunktion abgeschlossen ist;
wobei die Erstbefüllungsfunktion zum Ablassen von Luft aus der Hauptpumpe (7) zu einem Flüssigkeitsbehälter (1) durch Betätigen der Hauptpumpe (7) und einer Absaugpumpe (8) zum Ablassen der Luft in den Flüssigkeitsbehälter (1) über eine Rücklaufleitung (5) dient.

2. Steuermodul (20) nach Anspruch 1, wobei die Vorrichtung (1; 2) der Flüssigkeitsbehälter (1) für eine Abgasnachbehandlungsflüssigkeit und/oder das Versorgungsmodul (2) ist.

3. Steuermodul (20) nach Anspruch 2, das ausgebildet ist, durch Erkennen einer ID eines wesentlichen Sensors (21) in dem Flüssigkeitsbehälter (1) zu bestimmen, ob der Flüssigkeitsbehälter (1) neu installiert ist, wobei der wesentliche Sensor (21) in dem Flüssigkeitsbehälter (1) mindestens eines von Folgendem umfasst: einen Temperatursensor, einen Drucksensor, einen Flüssigkeitsstandsensor, einen Konzentrationssensor, einen Qualitätssensor und einen integrierten multifunktionalen Sensor, insbesondere einen integrierten Abgasnachbehandlungsflüssigkeitsstand-, -temperatur- und -konzentrationssensor.

4. Steuermodul (20) nach Anspruch 2 oder 3, das ausgebildet ist, durch Erkennen einer ID des wesentlichen Bestandteilelements in dem Versorgungsmodul (2) zu bestimmen, ob das Versorgungsmodul (2) neu installiert ist, wobei das wesentliche Bestandteilelement in dem Versorgungsmodul mindestens eines der folgenden Elemente umfasst: die Hauptpumpe (7), die Absaugpumpe (8), und einen Sensor (22) in dem Versorgungsmodul (2).

5. Steuermodul (20) nach einem der Ansprüche 1 bis 4, wobei das Steuermodul (20) in eine Fahrzeugsteuerung, eine SCR-Systemsteuerung oder eine Motorsystemsteuerung integriert ist, oder wobei das Steuermodul (20) separat ausgebildet und mit der Fahrzeugsteuerung, der SCR-Systemsteuerung oder der Motorsystemsteuerung verbunden ist.

6. Steuermodul (20) nach einem der Ansprüche 1 bis 5, wobei der Speicher (EEP) ein löschbarer Speicher in einer Fahrzeugsteuerung, in einer SCR-Systemsteuerung oder in einer Motorsystemsteuerung ist.

7. Steuermodul (20) nach einem der Ansprüche 1 bis 6, das ausgebildet ist, IDs von mehreren Vorrichtungen (1; 2) oder wesentlichen Bestandteilelementen davon, die bei einer ersten Verwendung bewirken, dass Luft in die Hauptpumpe (7) eintritt, auszulesen, und die Erstbefüllungsfunktion des SCR-Systems auszulösen, wenn bestimmt wird, dass eine oder mehrere der Vorrichtungen (1; 2) neu installiert ist/sind.

8. Steuermodul (20) nach einem der Ansprüche 1 bis 7, das ausgebildet ist, die erkannte ID der neu installierten Vorrichtung oder des wesentlichen Bestandteilelements davon in den Speicher (EEP) zu schreiben, wenn das Steuermodul (20) bestimmt, dass die Vorrichtung (1; 2) neu installiert ist.

9. Steuerverfahren zur Verwendung in einem SCR-System eines Fahrzeugs, das optional in dem Steuermodul nach einem der Ansprüche 1-8 durchgeführt wird, und das die folgenden Schritte umfasst:
sobald ein Fahrzeugmotor gestartet wurde, automatisches Erkennen einer ID mindestens einer Vorrichtung (1; 2) oder eines wesentlichen Bestandteilelements davon in dem SCR-System, und Vergleichen der erkannten ID mit einer zuvor gespeicherten ID der Vorrichtung oder des wesentlichen Bestandteilelements davon, um zu bestimmen, ob die Vorrichtung (1; 2) neu installiert ist, wobei die Vorrichtung bei einer ersten Verwendung bewirkt, dass Luft in eine Hauptpumpe (7) eines Versorgungsmoduls des SCR-Systems eintritt;
Anweisen des SCR-Systems, mit einem Betrieb zu beginnen, wenn bestimmt wird, dass die Vorrichtung nicht neu installiert ist;
Auslösen einer Erstbefüllungsfunktion des SCR-Systems, wenn bestimmt wird, dass die Vorrichtung (1; 2) neu installiert ist, und Anweisen des SCR-Systems, mit einem Betrieb zu beginnen, wenn die Erstbefüllungsfunktion abgeschlossen ist;
wobei die Erstbefüllungsfunktion zum Ablassen von Luft aus der Hauptpumpe (7) zu einem Flüssigkeitsbehälter (1) durch Betätigen der Hauptpumpe (7) und einer Absaugpumpe (8) zum Ablassen der Luft in den Flüssigkeitsbehälter (1) über eine Rücklaufleitung (5) dient.

10. Maschinen- oder computerlesbares Medium, das Software speichert, die, wenn sie ausgeführt wird, das Steuerverfahren zur Verwendung in einem SCR-System eines Fahrzeugs nach Anspruch 9 umsetzen kann.

## Revendications

1. Module de commande (20) destiné à être utilisé dans un système SCR de véhicule, configuré pour :
être connecté à au moins un dispositif (1 ; 2) dans le système SCR, le dispositif (1 ; 2) faisant entrer de l'air dans une pompe principale (7) d'un module d'alimentation (2) du système SCR lorsqu'il est utilisé pour la première fois ;
reconnaître un ID du dispositif (1 ; 2) ou d'un élément de composant intrinsèque de celui-ci via une interface d'échange de données ;
être connecté à une mémoire (EEP) mémorisant un ID du dispositif (1 ;2) ou de son élément de composant intrinsèque préalablement mémorisé ;
reconnaître automatiquement l'ID du dispositif (1 ; 2) ou de son élément de composant intrinsèque dès qu'un moteur de véhicule a démarré, et comparer l'ID reconnu avec l'ID du dispositif (1 ; 2) ou de son élément de composant intrinsèque préalablement mémorisé dans la mémoire (EEP), afin de déterminer si le dispositif est nouvellement installé ;
ordonner au système SCR de commencer à fonctionner, s'il est déterminé par la comparaison que le dispositif (1 ; 2) n'est pas nouvellement installé ;
déclencher une première fonction de remplissage du système SCR, s'il est déterminé par la comparaison que le dispositif (1 ; 2) est nouvellement installé, et ordonner au système SCR de commencer à fonctionner lorsque la première fonction de remplissage est terminée ;
la première fonction de remplissage consistant à évacuer l'air de la pompe principale (7) vers un réservoir de liquide (1) en activant la pompe principale (7) et une pompe d'extraction (8) pour évacuer l'air dans le réservoir de liquide (1) via une conduite de retour (5).

2. Module de commande (20) selon la revendication 1.
le dispositif (1 ; 2) étant le réservoir de liquide (1) pour le liquide de traitement des gaz d'échappement et/ou le module d'alimentation (2).

3. Module de commande (20) selon la revendication 2, configuré pour déterminer si le réservoir de liquide (1) est nouvellement installé en reconnaissant un ID d'un capteur intrinsèque (21) dans le réservoir de liquide (1), le capteur intrinsèque (21) dans le réservoir de liquide (1) comprenant au moins un des éléments suivants : un capteur de température, un capteur de pression, un capteur de niveau de liquide, un capteur de concentration, un capteur de qualité et un capteur multifonctionnel intégré, en particulier un capteur intégré de niveau, de température et de concentration de liquide de traitement des gaz d'échappement.

4. Module de commande (20) selon la revendication 2 ou 3, configuré pour déterminer si le module d'alimentation (2) est nouvellement installé en reconnaissant un ID de l'élément de composant intrinsèque dans le module d'alimentation (2), l'élément de composant intrinsèque dans le module d'alimentation comprenant au moins un des éléments suivants : la pompe principale (7), la pompe d'extraction (8) et un capteur (22) dans le module d'alimentation (2).

5. Module de commande (20) selon l'une quelconque des revendications 1 à 4, le module de commande (20) étant intégré dans un dispositif de commande de véhicule, un dispositif de commande de système SCR ou un dispositif de commande de système de moteur, ou le module de commande (20) étant formé séparément et connecté au dispositif de commande de véhicule, au dispositif de commande de système SCR ou au dispositif de commande de système de moteur.

6. Module de commande (20) selon l'une quelconque des revendications 1 à 5, la mémoire (EEP) étant une mémoire effaçable dans un dispositif de commande de véhicule, dans un dispositif de commande de système SCR ou dans un dispositif de commande de système de moteur.

7. Module de commande (20) selon l'une quelconque des revendications 1 à 6, configuré pour lire les ID de plusieurs dispositifs (1 ; 2) ou d'éléments de composant intrinsèque de ceux-ci, provoquant l'entrée d'air dans la pompe principale (7) lorsqu'elle est utilisée pour la première fois, et pour déclencher la première fonction de remplissage du système SCR lorsqu'il est déterminé qu'un ou plusieurs des dispositifs (1 ; 2) est/sont nouvellement installés.

8. Module de commande (20) selon l'une quelconque des revendications 1 à 7, configuré pour écrire l'ID reconnu du dispositif nouvellement installé ou l'élément de composant intrinsèque de celui-ci dans la mémoire (EEP), si le module de commande (20) détermine que le dispositif (1 ; 2) est nouvellement installé.

9. Procédé de commande destiné à être utilisé dans un système SCR de véhicule, réalisé éventuellement dans le module de commande selon l'une quelconque des revendications 1 à 8, et comprenant les étapes suivantes :
une fois qu'un moteur de véhicule a démarré, la reconnaissance automatiquement d'un ID d'au moins un dispositif (1 ; 2) ou d'un élément de composant intrinsèque de celui-ci dans le système SCR, et la comparaison de l'ID reconnu avec un ID préalablement mémorisé du dispositif ou de l'élément de composant intrinsèque de celui-ci, afin de déterminer si le dispositif (1 ; 2) est nouvellement installé, le dispositif provoquant l'entrée d'air dans une pompe principale (7) d'un module d'alimentation du système SCR lorsqu'il est utilisé pour la première fois ;
le fait d'ordonner au système SCR de commencer à fonctionner s'il est déterminé que le dispositif n'est pas nouvellement installé ;
le déclenchement d'une première fonction de remplissage du système SCR s'il est déterminé que le dispositif (1 ; 2) est nouvellement installé, et le fait d'ordonner au système SCR de commencer à fonctionner lorsque la première fonction de remplissage est terminée ;
la première fonction de remplissage consistant à évacuer l'air de la pompe principale (7) vers un réservoir de liquide (1) en activant la pompe principale (7) et une pompe d'extraction (8) pour évacuer l'air dans le réservoir de liquide (1) via une conduite de retour (5).

10. Support lisible par machine ou par ordinateur, mémorisant un logiciel qui, lorsqu'il est exécuté, peut réaliser le procédé de commande pour une utilisation dans un système SCR de véhicule selon la revendication 9.
